# EUROPEAN PATENT APPLICATION

(11) **EP 2 479 964 A2**
(43) Date of publication of application: **25.07.2012**
(21) Application number: 12000090.6
(22) Date of filing: 09.01.2012
(51) Int. Cl.: H04M 1/725, G08B 6/00

(54) **Indication of device status by haptic feedback**

(30) Priority: 25.01.2011 US 201113012846
(71) Applicant: Harris Corporation, Melbourne FL 32919 (US)
(72) Inventor: Garigen, David, Rochester New York 14626 (US)
(74) Representative: Schmidt, Steffen

(57) **Abstract**

A method and system for communicating electronic device (8) status to a user involves determining an information to be communicated to a user of the device. In response to such determining the electronic device (8) selectively activates a vibrator element (28,29,30,31) of a plurality of vibrator elements which are spaced apart at disparate locations (11,13,15,17) on the device. The vibrator elements are selectively activated to uniquely communicate the type of information being conveyed to a user based on the location of the vibrator element on the device. The number of times or duration that the vibrator element are activated can also be selectively controlled in accordance with a content of the information. The foregoing method of communicating is referred to herein as vibrator location encoded messaging "VLEM" and it can be used to communicate any type of information.

## Description

### Statement of the Technical Field

The inventive arrangements relate generally to electronic devices, and more particularly to methods and systems for communicating of device status.

### Description of the Related Art

Electronic devices commonly provide some way of communicating status information to a user. Such status information can include any type of information relating directly or indirectly to the operation of the device, ranging from device settings and conditions, to information concerning data or signals processed by the device. For example device settings and conditions can include many items such as power on/off condition, channel settings, and error conditions. Information concerning data or signals can include the presence of stored messages, alerts communicated to the device, and so on.

Various types of alpha-numeric displays are commonly used to indicate status information of electronic devices. For example, such devices may include liquid crystal display (LCD) technology or light emitting diode (LED) technology. Such displays work well in many situations but sometimes are inappropriate. For example, in a combat scenario, such alphanumeric displays can potentially endanger soldiers. One risk of such displays for soldiers is that they typically involve some form of radiated light so that the soldier can see the display. A second risk associated with such displays is that, while the soldier is reading from the alpha-numeric display, it distracts the soldier from looking at what is happening on a battlefield.

The use of a vibrator in electronic devices is well known in the art. However, the range of information that can be communicated by a vibrator in convention devices is fairly limited. For example, vibrators have been used in cell phones and other portable electronic devices to alert users to incoming calls and the presence of waiting messages. Vibrators have also been used in some applications to provide haptic feedback so that the user receives a tactile indication that a user input has been received by the electronic device. For example, vibrators have been used to provide haptic feedback as a user touches keys on a keyboard.

### SUMMARY OF THE INVENTION

The invention concerns method and apparatus for communicating device status to a user. The method begins by determining an information to be communicated to a user of the device. For example, such determining can be performed by detecting a change in a sensor condition to identify the information to be communicated. However, the determining step can also include other actions that are performed autonomously or semi-autonomously by the device, and therefore do not require a user input. In response to such determining process, the method then continues with the device selectively activating a vibrator element or a plurality of vibrator elements which are spaced apart at disparate locations on the device. In some embodiments, the disparate locations are chosen so as to be located at two or more extremities of the device. For example, the disparate locations in some embodiments are selected to include a plurality of opposing remote corners of the device. The vibrator elements are then selectively activated to uniquely communicate the type of information being conveyed to a user based on the location of the vibrator element on the device. This communicating can further include selectively controlling a number of times or duration that the vibrator element is activated in accordance with a content of the information. The foregoing method of communicating is referred to herein as vibrator location encoded messaging (VLEM) and it can be used to communicate any type of information.

In some embodiments of the invention, the sensor used to determine the information to be communicated to a user can be a switch. In such embodiments, the change that is detected is a user initiated change in a position of the switch. Further, in such embodiments, the activating step can include selectively activating the vibrator element that is proximate to the sensor which has been activated. Accordingly, the vibrator element which has been activated can be used to vibrate the sensor switch at which the change of position has been detected or an area adjacent to the sensor switch.

More than one sensor can be used with the invention and the method can involve detecting a change in a condition of two or more such sensors. Each of the sensors is advantageously disposed proximate one of the disparate locations on the device nearby to a respective one of the vibrators. A user-initiated change in the condition of a selected one of the plurality of sensors is used to identify the information to be communicated. The vibrator element that is nearest to the one of the plurality of sensors where the change of the condition is detected is then used to communicate such requested information. The vibrator element can vibrate the sensor where a change of condition was detected, or an area adjacent to such sensor.

In some embodiments, the control system can determine a second information to be communicated to the user of the device. Responsive to determining such second information the control system activates a second vibrator element on or in the device to uniquely communicate the second information based on the location of the vibrator element on the device. Also, the invention is not limited to VLEM communications in which only one vibrator element is activated at a time. Instead, two or more of the vibrator elements can be activated concurrently at predetermined locations which are spaced apart at disparate locations on the device. The selection of such combination of disparate locations in that case would then uniquely communicate to the user the type of information being provided.

The invention also concerns an electronic device which includes a plurality of vibrator elements which are spaced apart at disparate locations on the device. The electronic device includes a control system configured for determining an information to be communicated to a user of the device in accordance with the methods described above. Accordingly, the control system is configured to selectively activate one or more of the vibrator elements at one or more of the disparate locations. More particularly, the control system is configured to select the vibrator elements which are activated based on a type of information to be communicated.

The control system can be configured to detect a change in a condition of at least one sensor to identify the information to be communicated. Alternatively, any of the other methods described herein can also be used for determining an information to be communicated. The control system can be configured to perform VLEM communications using the methods described above.

### BRIEF DESCRIPTION OF THE DRAWINGS

Embodiments will be described with reference to the following drawing figures, in which like numerals represent like items throughout the figures, and in which:

FIG. 1 is a perspective view of an electronic device that is useful for understanding the present invention.

FIG. 2 is a block diagram which is useful for understanding the features of a control system that can be used in the electronic device of FIG. 1.

### DETAILED DESCRIPTION

The various embodiments of the present invention are described with reference to the attached figures, wherein like reference numbers are used throughout the figures to designate similar or equivalent elements. The figures are not drawn to scale and they are provided merely to illustrate the embodiments of the present invention. Several aspects of the invention are described below with reference to example applications for illustration. It should be understood that numerous specific details, relationships, and methods are set forth to provide a full understanding of the invention. One having ordinary skill(s) in the relevant art, however, will readily recognize that the invention can be practiced without one or more of the specific details or with other methods. In other instances, well-known structures or operation are not shown in detail to avoid obscuring the invention. The present invention is not limited by the illustrated ordering of acts or events, as some acts can occur in different orders and/or concurrently with other acts or events. Furthermore, not all illustrated acts or events are required to implement a methodology in accordance with the present invention.

Handheld electronic devices commonly provide some way of communicating status information to a user concerning the operation of the electronic device. Such status information can include any type of information relating directly or indirectly to the operation of the device, ranging from device settings and conditions, to information concerning data or signals processed by the device. For example, device settings and conditions can include many items such as power on/off condition, remaining battery power, channel settings, and error conditions. Information concerning data or signals can include the presence of stored messages, alerts communicated to the device, and so on.

The present invention overcomes the limitations of conventional approaches for providing of status information for portable or handheld electronic devices by relying upon one or more vibrators that are positioned at various locations on the electronic device. Notably, the particular location of the vibrator within the confines of the electronic device is used to communicate status information to the user. In the present invention, information can thus be encoded based on vibrator location within a device. This technique shall be referred to herein as vibrator location encoded messaging "VLEM." With such an arrangement, the user can utilize his sense of touch instead of sight to access information from the device.

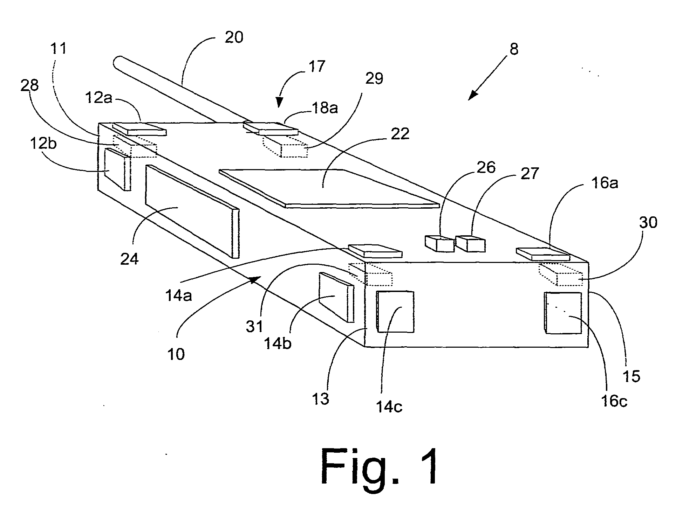

In order to more fully understand the VLEM concept, reference is made to FIG. 1 which shows an electronic device 8, having a body 10 formed in a shape that can generally be described as a rectangular prism. The rectangular prism generally defines corners 11, 13, 15, and 17 at the remote extremities of the body. The electronic device can have various features such as an alpha-numeric display 22. If the electronic device is a portable hand-held radio transceiver a push to talk switch 24, and an antenna can also be provided. Still, the invention is not limited in this regard and the electronic device shown herein is merely provided as an example.

In some embodiments, the electronic device 8 can have at least one sensor 26 that is suitable for sensing a user input selection of information that the user wishes to receive from the device. Any kind of sensor can be used for this purpose provided that it enables the user to communicate to the device the user's selection of information that the user wishes to receive from the device. For example, a simple user activated switch could be used for this purpose. In some embodiments, a pushbutton momentary-on switch could be used, but the invention is not limited in this regard. For example any type of touch activated sensor could be used for this purpose provided that it is capable of producing a sensor output variation that is capable of being sensed or detected by an electronic control system.

Two or more vibrator elements 28, 29, 30, 31 are provided within or on the electronic device 8. The phrase "vibrator element" as used herein refers to any device capable of producing a vibration or other tactile response that is perceptible to the sense of touch. In some embodiments, such vibrator elements can comprise conventional micro-vibrators which are operated by brushless DC motors. Such devices are widely used in the telecommunications industry for cellular telephones and therefore will not be described here in detail. Still, the invention is not limited in this regard and any other device can be used to provide the vibrator elements described herein.

The two or more vibrator elements 28, 29, 30, 31 are disposed spaced apart at disparate location within the electronic device 8. As used herein, the term "disparate locations" means that the locations are markedly dissimilar and distinct from each other. In this regard, the disparate locations are preferably sufficiently different from one another so that vibrations originating in one such disparate location can be distinguished from vibrations originating in another of such disparate locations. Also, the disparate locations are preferably selected so that a user can easily recognize the disparate location by touch, and without visually observing the electronic device. The disparate locations in some embodiments can be located at two or more extremities of the device to facilitate identification of which sensor is being activated. As used herein, the term "extremities" can be understood to mean locations at the extreme or terminal end points of the device body 10. For example, in the embodiment shown in FIG. 1, a vibrator element can be disposed within the body 10 at two or more corners 11, 13, 15, and 17. The corners are markedly dissimilar because they are separated by a substantial distance within the device, and are located at opposing corners so that are easily distinguished without visual inspection. Still, the invention is not limited in this regard and other locations can also be suitable, provided that they can be readily distinguished from one another by a user.

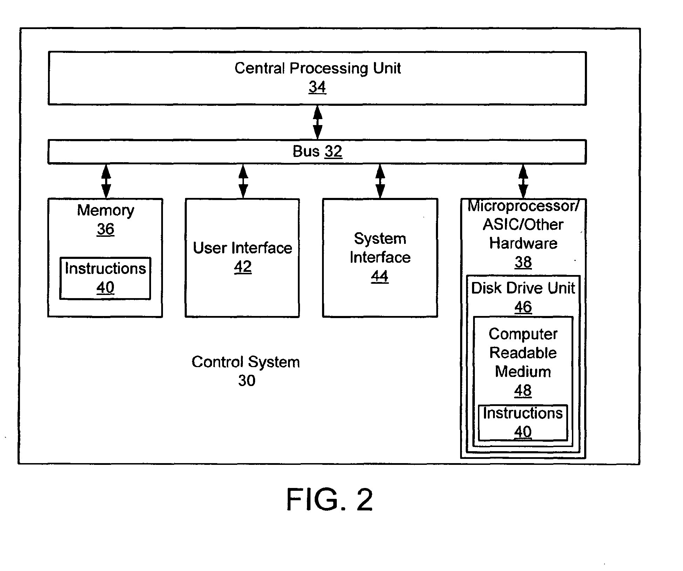

The electronic device 8 also includes at least one control system 30 (shown in FIG. 2) that is responsive to the sensor 26. In some embodiments, the electronic control system is configured to selectively activate one or more of the vibrator elements at one or more of the disparate locations in response to a change in condition at the sensor. For example, if the sensor is a momentary switch, the change in condition can be a change in a switch position. The control system is advantageously configured to uniquely communicate the information to a user using VLEM techniques as described herein.

According to some embodiments, the control system is advantageously configured to identify the information that is to be communicated to the user based on a detected change in a condition of the sensor 26. For example, in a first embodiment of the invention, a single activation of the sensor 26 (e.g., changing a position of a switch) can indicate that the user seeks a report on the status of a remaining charge in the battery which serves as the power source of the electronic device 8. By predetermined convention, battery report indications can be provided exclusively at corner 11. The battery report can be as simple as activating the vibrator element 28 to indicate that the battery has some predetermined level of charge. The user is assured that the electronic device is providing battery information because of the location of the vibrating element which is activated. Two activations of the sensor 26 (e.g., two presses on a momentary on switch) can be interpreted by the control system as an indication that the user is making an inquiry regarding an encryption setting. By predetermined convention, encryption on/off setting information can be provided exclusively at corner 17. The encryption report can be as simple as activating the vibrator element 29 to indicate that encryption is active. By varying the number of sensor activations (e.g., the number of times a switch is pressed), the user can thus communicate to the electronic device 8 the information he wishes to receive. Confirmation regarding the type of information being provided by the electronic device 8 is communicated to the user based on vibrator location, using VLEM techniques as described herein.

From the foregoing, it will be understood that when the control system detects a change of a condition at sensor 26, such change of condition can be used by the control system to determine a type of information that is requested by a user. However, it should be appreciated that this is not the only way that the electronic device 8 can determine a particular item of information that should be communicated to a user. For example, instead of relying upon a user request for information based on a sensor 26 input, the determining step can also include other actions that are performed autonomously or semi-autonomously by the control system 30. In some embodiments, such actions may or may not require an input from the user of the electronic device 8. For example, such actions can involve the control system 30 automatically checking a memory location or receiving an interrupt message which causes the control system to then evaluate the status of an operating parameter for the electronic device 8. For example the control system can check a memory location in which the status of battery information is stored. The determining step could also include an evaluation of a message queue to evaluate and identify messages received from other devices. In response to such determination, the control system would then selectively activate one or more vibrator element of a plurality of vibrator elements which are spaced apart at disparate locations on the device to communicate the information using the VLEM techniques described herein.

More detailed information can also be communicated to a user by changing the pattern or duration of vibration produced at a particular location. For example, in the case of battery power, the control system can be configured to cause vibrator element to be activated a predetermined number of times corresponding to a battery power level. In such an embodiment, ten activations of the vibrator element in quick succession can indicate full charge, five activations can indicate half charge, and one activation can indicate a low battery. Similarly, if a user presses a sensor 26 button three times, the electronic device can respond by reporting a channel number that the device is set to using the VLEM techniques described herein. For example, channel number reporting can be provided at corner 13 using vibrator element 31. The vibrator element can be activated a predetermined number of times corresponding to a channel number. Alternatively, a duration of the vibrator activation can be used to indicate a quantitative amount. In the case of a battery report, activation of the vibrator element 28 could have a duration of five seconds to indicate a full charge, whereas activation for one second could indicate a low battery condition.

Of course, the invention is not limited to the arrangement described above by which different information to be reported is determined based on the number of sensor activations that are detected. Instead, a single activation of the sensor 26 could be used to report on the status of several different predefined items of status information. For example a single activation of sensor 26 could result in battery information being reported at corner 11, channel information being reported at corner 13, transmitter power level setting being reported at corner 15, and encryption status being reported at corner 17. Each vibrator in such a scenario could indicate the status of a subsystem; if they all vibrate, then all of the systems are working.

In some embodiments of the invention, a different arrangement can be used by the electronic device 8 to determine the type of information that is being requested by the user. Rather than determining a number of activations of a single sensor 26, multiple sensors can instead be used. For example, in some embodiments, a change of condition (e.g., switch activation) at a first sensor 26 can indicate that a first type of information (e.g., battery information) is required, and a change of condition at a second sensor 27 can indicate that a second type of information (e.g., encryption status on/off) is required. The electronic device can then activate the necessary vibrator elements to communicate such information using the VLEM techniques described herein.

According to yet another aspect of the invention, the position of the sensor used to request status information of a particular type can be proximate to the predetermined vibrator element which is used to communicate information of that type. Such an arrangement is illustrated in FIG. 1 where sensor 12a is proximate vibrator element 28, sensor 14a is proximate vibrator element 31, sensor 16a is proximate vibrator element 30, and sensor 18a is proximate vibrator element 29. In such a scenario, each vibrator element 28, 29, 30, and 31 is arranged to vibrate an area proximate or adjacent to sensor 12a, 14a, 16a, 18a respectively.

Alternatively, or in addition thereto, the vibrator element can vibrate the sensor that has been activated for purposes of requesting the device status information. This can be accomplished by mounting the sensor directly on or at least near to the vibrator element which is activated. From the foregoing, it will be appreciated that the electronic device can include two or more of the sensors disposed on the devices, and the control system is configured to determine the information to be communicated by detecting a change in a condition of any one the plurality of sensors. The control system can be further configured to selectively activate the vibrator element that is nearest to the one of the plurality of sensors where the change of the condition is detected.

According to yet another embodiment, combinations of vibrator elements in selected disparate locations can be used to communicate certain types of information. For example, information of a first type can be communicated using a first vibrator element at a first disparate location, information of a second type can be communicated using a second vibrator element at a second disparate location, and information of a third type can be communicated using the first and second vibrator elements. In other words, use of certain predetermined combinations of vibrator elements at disparate locations can have specific meanings. For example, concurrent activation of vibrator elements 28 and 29 can mean that a message has been received by the electronic device 8. Concurrent activation of vibrator elements 28, 29, 20 and 31 can mean that a message has been received and that such message has been flagged as a high priority message.

Additional sensors can be provided to permit a user to identify additional types of information for which the user is seeking status information. In some embodiments, such sensors can be located on more than one surface of electronic device 8. For example, sensors 12b, 14b and sensors 14c, 16c can be located on the sides and bottom, respectively, of the electronic device. In some embodiments, activating two or more sensors (e.g., 12a, 12b) located in the same general location (e.g., in proximity to corner 11) concurrently can be understood by the control system as a request for information of a type that is different as compared to activating sensors 12a or 12b separately. In either case, the control system will provide such information using the vibrator element in proximity to the sensors which have been activated. In this regard it will be appreciated that a common vibrator element 31 can be used for responding to certain sub-sets of sensors 14a, 14b, 14c which are in close proximity in one of the disparate locations of the electronic device.

Referring now to FIG. 2, a control system 30 will be described which can be used to implement the VLEM methods and apparatus described herein. It should be understood that the control system 30 is merely one possible arrangement by which the present invention could be implemented. The inventive arrangements are not intended to be limited by the control system description herein. Instead, any other suitable system comprised of hardware, software, firmware or the combination thereof can be used to implement the control system.

Referring again to FIG. 2, the control system 30 includes a system interface 44, a user interface 342, a Central Processing Unit (CPU) 34, a system bus 32, a memory 36 connected to and accessible by other portions of the control system 30 through system bus 32, and hardware entities 38 connected to system bus 32. System interface 44 allows the control system 30 to communicate directly vibrator elements 28, 29, 30, 31. At least some of the hardware entities 38 perform actions involving access to and use of memory 36, which may be a random access memory (RAM), a disk drive, and/or a compact disc read only memory (CD-ROM).

The user interface can include one or more of sensors 12a, 12b, 14a, 14b, 14c, 16a, 16c, 18a, 26, and 27. The user interface can also include an alpha-numeric display 22, and a push-to-talk switch 24. Other user interface elements (not shown) can also include track balls, alpha-numeric keypads, and multi-axis switches that can be used for scrolling through various menus and sub-menus.

As shown in FIG. 2, the hardware entities 38 can include a disk drive unit 46 comprising a computer-readable storage medium 48 on which is stored one or more sets of instructions 40 (e.g., software code) configured to implement one or more of the methodologies, procedures, or functions described herein. The instructions 40 can also reside, completely or at least partially, within the memory 36 and/or within the CPU 34 during execution thereof by the data link 206. The memory 36 and the CPU 34 also can constitute machine-readable media. The term "machine-readable media", as used here, refers to a single medium or multiple media (e.g., a centralized or distributed database, and/or associated caches and servers) that store the one or more sets of instructions 40. The term "machine-readable media", as used here, also refers to any medium that is capable of storing, encoding or carrying a set of instructions 40 for execution that cause the control system 204 to perform any one or more of the methodologies of the present disclosure. As evident from the above discussion, the control system 30 implements one or more of the processes described herein for carrying out the VLEM communications described herein.

## Claims

1. A method for communicating device status to a user, comprising:
determining an information to be communicated to a user of said device;
responsive to said determining step, selectively activating a vibrator element from a plurality of vibrator elements which are spaced apart at disparate locations on said device, such selective activation uniquely communicating said information based on said location of said vibrator element on said device.

2. The method according to claim 1, wherein said determining further comprises detecting a change in a sensor condition to identify said information to be communicated.

3. The method according to claim 2, wherein said determining further comprises detecting a change in a condition of any of a plurality of sensors, each respectively disposed proximate one of said disparate locations on said device.

4. The method according to claim 1, further comprising
responsive to said determining, selectively activating two or more of said plurality of vibrator elements at predetermined locations which are spaced apart at disparate locations on said device to uniquely communicate said information based on said location of said two or more vibrator elements on said device.

5. The method according to claim 1, wherein said disparate locations are selected to be located at two or more extremities of said device.

6. An electronic device including a system for communicating device status to a user, comprising:
a plurality of vibrator elements disposed spaced apart at disparate locations on said device;
a control system configured for determining an information to be communicated to a user of said device, and to selectively activate one or more of said vibrator elements at one or more of said disparate locations, wherein said control system is configured to select said vibrator elements which are activated based on a type of information to be communicated.

7. The electronic device according to claim 6, wherein said control system is configured to detect a change in a condition of at least one sensor to identify said information to be communicated.

8. The electronic device according to claim 7, wherein said vibrator element is arranged to vibrate said sensor or an area adjacent to said sensor.

9. The electronic device according to claim 6, wherein said disparate locations are located at two or more extremities of said device.

10. The electronic device according to claim 6, wherein said control system is configured to selectively control a number of times that said vibrator element is activated in accordance with a content of said information.
